# EUROPEAN PATENT APPLICATION

(11) **EP 4 822 609 A1**
(43) Date of publication of application: **14.10.2026**
(21) Application number: 23960752.6
(22) Date of filing: 05.12.2023
(51) Int. Cl.: G06N 10/40

(54) **QUANTUM DEVICE**

(71) Applicant: FUJITSU LIMITED, Kawasaki-shi, Kanagawa 211-8588 (JP)
(72) Inventor: MIYATAKE, Tetsuya, Kawasaki-shi, Kanagawa 211-8588 (JP); MIYAHARA, Shoichi, Kawasaki-shi, Kanagawa 211-8588 (JP); KAWAGUCHI, Kenichi, Kawasaki-shi, Kanagawa 211-8588 (JP); ISHIGURO, Tetsuro, Kawasaki-shi, Kanagawa 211-8588 (JP); IWAI, Toshiki, Kawasaki-shi, Kanagawa 211-8588 (JP)
(74) Representative: Haseltine Lake Kempner LLP
(86) International application number: PCT/JP2023/043483
(87) International publication number: WO 2025/120737

(57) **Abstract**

A quantum device includes a quantum bit element that includes a first diamond crystal layer having a first center point and having a shape extending in four directions from the first center point so as to be orthogonal to each other, a second diamond crystal layer having a second center point and having a shape extending in four directions from the second center point so as to be orthogonal to each other, and a color center present in one of the first diamond crystal layer and the second diamond crystal layer, the first diamond crystal layer and the second diamond crystal layer being stacked so that at least parts of the first center point and the second center point overlap each other, a first optical waveguide connected to each of four first ends of the first diamond crystal layer, and a second optical waveguide connected to each of four second ends of the second diamond crystal layer.

## Description

### TECHNICAL FIELD

The present invention relates to a quantum device.

### BACKGROUND ART

A diamond spin-based quantum computer has been proposed that uses, as a quantum bit, an electron spin of a color center, which is a composite defect of an impurity atom and a vacancy in a diamond crystal (for example, Patent Literatures 1 to 4).

### CITATION LIST

### PATENT LITERATURE

Patent Literature 1: International Publication No. WO2022/070341
Patent Literature 2: International Publication No. WO2022/259484
Patent Literature 3: U.S. Patent Application Publication No. 2022/206361
Patent Literature 4: U.S. Patent Application Publication No. 2021/117845

### SUMMARY OF INVENTION

### TECHNICAL PROBLEM

It is desired to provide a plurality of quantum bit elements each including a diamond crystal layer in which a color center is present, and to enable formation of quantum entanglement between adjacent quantum bit elements among the plurality of quantum bit elements.

According to an aspect, an object is to enable formation of the quantum entanglement between a plurality of adjacent quantum bit elements.

### SOLUTION TO PROBLEM

According to a first aspect, there is provided a quantum device including: a quantum bit element that includes a first diamond crystal layer having a first center point and having a shape extending in four directions from the first center point so as to be orthogonal to each other, a second diamond crystal layer having a second center point and having a shape extending in four directions from the second center point so as to be orthogonal to each other, and a color center present in one of the first diamond crystal layer and the second diamond crystal layer, the first diamond crystal layer and the second diamond crystal layer being stacked so that at least parts of the first center point and the second center point overlap each other; a first optical waveguide connected to each of four first ends of the first diamond crystal layer; and a second optical waveguide connected to each of four second ends of the second diamond crystal layer.

### ADVANTAGEOUS EFFECTS OF INVENTION

In one aspect, the quantum entanglement can be formed between a plurality of adjacent quantum bit elements.

### BRIEF DESCRIPTION OF DRAWINGS

[FIG. 1] FIG. 1(a) is a plan view of a quantum bit element in Comparative Example 1, and FIG. 1(b) is a plan view of a quantum device according to Comparative Example 1.
[FIG. 2] FIG. 2(a) is a plan view of a quantum bit element in Comparative Example 2, and FIG. 2(b) is a plan view of a quantum device according to Comparative Example 2.
[FIG. 3] FIG. 3 is a plan view (tentative) of a quantum bit element in an embodiment.
[FIG. 4] FIG. 4 is a plan view of the quantum bit element in the embodiment.
[FIG. 5] FIGs. 5(a) to 5(c) are exploded plan views of FIG. 4.
[FIG. 6] FIG. 6(a) is a cross-sectional view taken along a line A-A of FIG. 4, and FIG. 6(b) is a cross-sectional view taken along a line B-B of FIG. 4.
[FIG. 7] FIGs. 7(a) to 7(c) are diagrams illustrating a method of manufacturing the quantum device according to the embodiment (part 1).
[FIG. 8] FIGs. 8(a) and 8(b) are diagrams illustrating a method of manufacturing the quantum device according to the embodiment (part 2).
[FIG. 9] FIGs. 9(a) to 9(c) are diagrams illustrating a method of manufacturing the quantum device according to the embodiment (part 3).
[FIG. 10] FIGs. 10(a) and 10(b) are cross-sectional views illustrating other examples of the location of a color center in the embodiment.
[FIG. 11] FIGs. 11(a) and 11(b) are cross-sectional views of the vicinity of the color center in the embodiment.
[FIG. 12] FIG. 12 is a plan view illustrating the transmission of an optical pulse and a photon pulse in an embodiment.
[FIG. 13] FIG. 13 is a plan view of a main part of the quantum device according to the embodiment.
[FIG. 14] FIG. 14 is a block diagram of the quantum device according to the embodiment.
[FIG. 15] FIGs. 15(a) and 15(b) are cross-sectional views of a quantum bit element in Modification 1 of the embodiment.
[FIG. 16] FIGs. 16(a) and 16(b) are cross-sectional views of a quantum bit element in Modification 2 of the embodiment.
[FIG. 17] FIGs. 17(a) and 17(b) are cross-sectional views of a quantum bit element in Modification 3 of the embodiment.

### DESCRIPTION OF EMBODIMENTS

First, a quantum device according to a comparative example will be described in order to clarify the problem to be solved by the present invention.

### [Comparative Example 1]

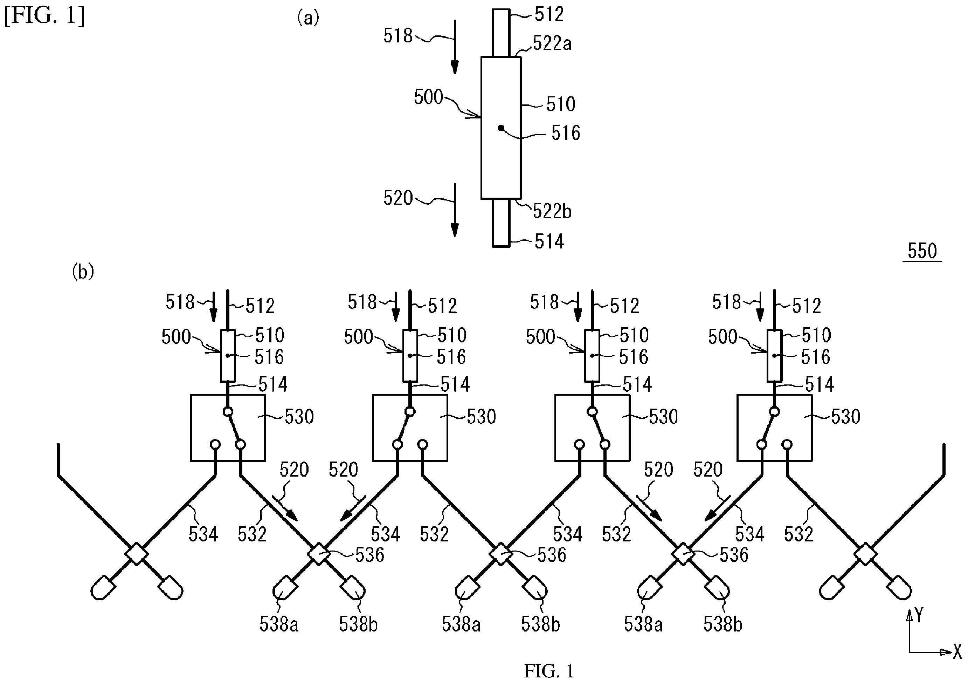

FIG. 1(a) is a plan view of a quantum bit element 500 in Comparative Example 1. As illustrated in FIG. 1(a), the quantum bit element 500 in Comparative Example 1 includes a diamond crystal layer 510 including a color center 516. An input optical waveguide 512 is connected to one end 522a of the diamond crystal layer 510, and an output optical waveguide 514 is connected to the other end 522b. The color center 516 is, for example, a nitrogen-vacancy center (NV center) composed of nitrogen and a vacancy. The input optical waveguide 512 transmits an optical pulse 518 for resonance excitation or initialization introduced into the color center 516. The output optical waveguide 514 transmits a photon pulse 520 of a single photon emitted from the color center 516 by the introduction of the optical pulse 518.

FIG. 1(b) is a plan view of a quantum device 550 according to Comparative Example 1. As illustrated in FIG. 1(b), in the quantum device 550 according to Comparative Example 1, a plurality of quantum bit elements 500 are provided side by side in an X direction. An optical switch 530 is connected to the output optical waveguide 514 connected to each of the plurality of quantum bit elements 500. The optical switch 530 is, for example, a MEMS (Micro Electro Mechanical Systems) switch. An optical waveguide 532 and an optical waveguide 534 are connected to the optical switch 530. The optical waveguide 532 to which one of the adjacent quantum bit elements 500 is connected via the optical switch 530 and the optical waveguide 532 to which the other is connected via the optical switch 530 are connected to a common beam splitter 536. The beam splitter 536 is connected to photodetectors 538a and 538b, which are single-photon photodetectors.

The photon pulse 520 emitted from one of the adjacent quantum bit elements 500 into the optical waveguide 532 and the photon pulse 520 emitted from the other into the optical waveguide 534 are introduced into the common beam splitter 536 and detected by the photodetector 538a or the photodetector 538b. This can form the quantum entanglement between adjacent quantum bit elements 500.

As described above, the quantum device 550 according to Comparative Example 1 includes the optical switch 530 at the subsequent stage of the quantum bit element 500. Since the photon pulse 520 of the single photon emitted from the quantum bit element 500 is a minute signal, it may be attenuated or extinguished due to a subtle shift in the switching operation of the optical switch 530. Therefore, in the configuration in which the optical switch 530 switches the path of the photon pulse 520, the photon pulse 520 may be attenuated or extinguished, and the photon pulse 520 may not be detected by the photodetectors 538a and 538b.

### [Comparative Example 2]

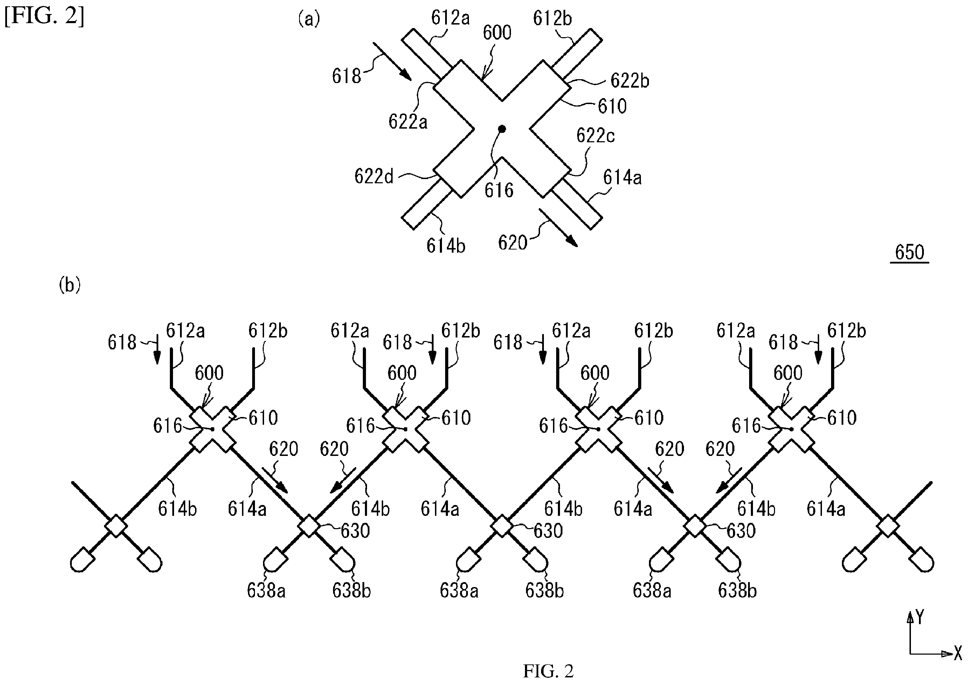

FIG. 2(a) is a plan view of a quantum bit element 600 in Comparative Example 2. As illustrated in FIG. 2(a), in the quantum bit element 600 according to Comparative Example 2, a diamond crystal layer 610 has a cross shape and has four ends 622a, 622b, 622c, and 622d. An input optical waveguide 612a is connected to the end 622a, and an input optical waveguide 612b is connected to the end 622b. An output optical waveguide 614a is connected to the end 622c, and an output optical waveguide 614b is connected to the end 622d. As described above, the quantum bit element 500 in Comparative Example 1 has a one-input and one-output structure, whereas the quantum bit element 600 in Comparative Example 2 has a two-input and two-output structure.

The diamond crystal layer 610 includes a color center 616. The color center 616 is, for example, an NV center, and is present at the center of the diamond crystal layer 610. The input optical waveguides 612a and 612b transmit optical pulses 618 to be introduced into the color center 616. When the optical pulse 618 is transmitted from one of the input optical waveguides 612a and 612b toward the color center 616, the optical pulse 618 is not transmitted from the other thereof toward the color center 616. FIG. 2(a) illustrates a case where the optical pulse 618 is transmitted through the input optical waveguide 612a. The output optical wave guide 614a transmits a photon pulse 620 of a single photon emitted from the color center 616 when the optical pulse 618 is introduced from the input optical waveguide 612a. The output optical wave guide 614b transmits the photon pulse 620 of the single photon emitted from the color center 616 when the optical pulse 618 is introduced from the input optical waveguide 612b.

FIG. 2(b) is a plan view of a quantum device 650 according to Comparative Example 2. As illustrated in FIG. 2(b), in the quantum device 650, a plurality of quantum bit elements 600 are provided side by side in the X direction. The output optical waveguide 614a connected to one of the adjacent quantum bit elements 600 and the output optical waveguide 614b connected to the other thereof are connected to a common beam splitter 630. The beam splitter 630 is connected to photodetectors 638a and 638b, which are single-photon photodetectors.

The photon pulse 620 emitted from one of the adjacent quantum bit elements 600 into the output optical waveguide 614a and the photon pulse 620 emitted from the other thereof into the output optical waveguide 614b are introduced into the common beam splitter 630 and detected by the photodetector 638a or the photodetector 638b. This can form the quantum entanglement between the adjacent quantum bit elements 600.

As described above, since the quantum bit element 600 in Comparative Example 2 has two inputs and two outputs, the quantum entanglement between the quantum bit elements 600 adjacent to each other in the X direction can be formed without using an optical switch as in Comparative Example 1. However, when the plurality of quantum bit elements 600 are provided side by side in the Y direction in addition to the X direction, the quantum entanglement between the quantum bit elements 600 adjacent in the Y direction cannot be formed.

### [Embodiment]

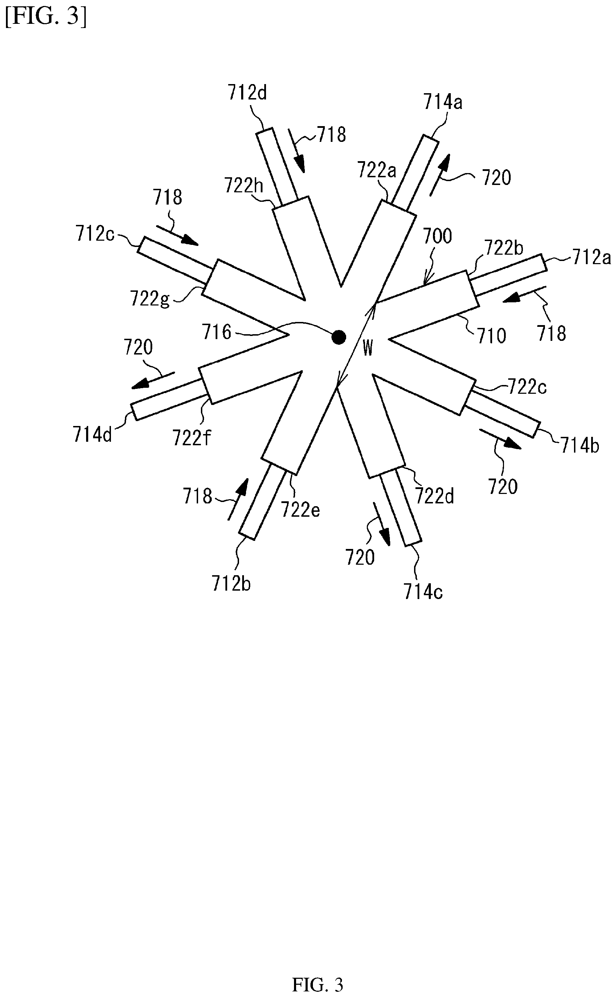

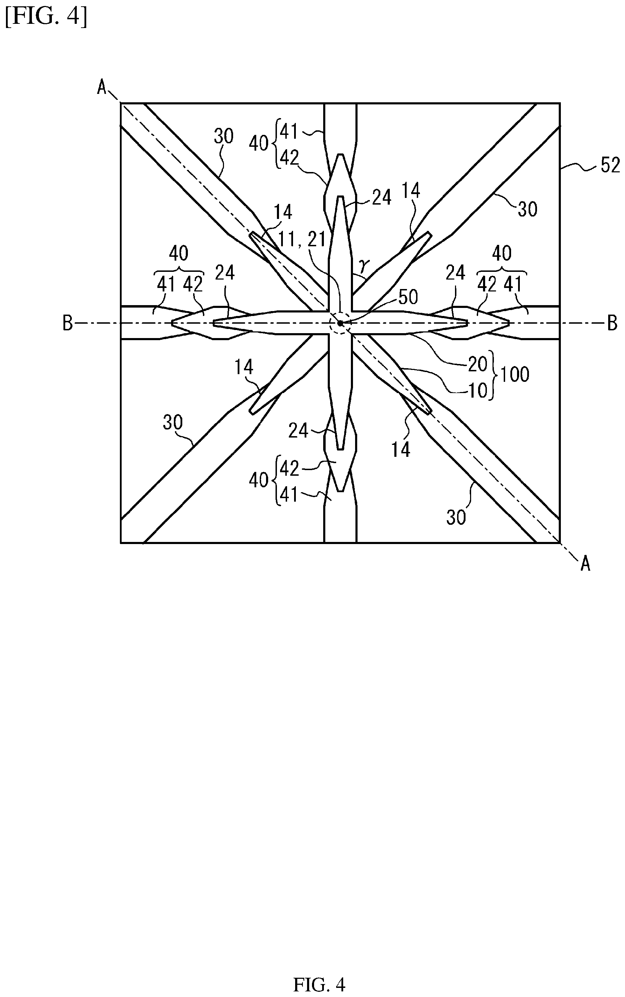

FIG. 3 is a plan view (tentative) of a quantum bit element in an embodiment. FIG. 4 is a plan view of a quantum bit element 100 according to the embodiment. The inventor of the present application considered that the quantum bit element had a four-input four-output structure in order to further increase the number of entanglements.

In FIG. 3, a diamond crystal layer 710 has eight ends 722a, 722b, 722c, 722d, 722e, 722f, 722g, and 722h. An input optical waveguide 712a is connected to the end 722b, an input optical waveguide 712b is connected to the end 722e, an input optical waveguide 712c is connected to the end 722g, and an input optical waveguide 712d is connected to the end 722h. An output optical waveguide 714a is connected to the end 722a, an output optical waveguide 714b is connected to the end 722c, an output optical waveguide 714c is connected to the end 722d, and an output optical waveguide 714d is connected to the end 722f.

The diamond crystal layer 710 includes a color center 716. The color center 716 is, for example, an NV center, and is present at the center of the diamond crystal layer 710. The input optical waveguides 712a, 712b, 712c, and 712d transmit optical pulses 718 that are introduced into the color center 716. The output optical waveguide 714a transmits a photon pulse 720 emitted from the color center 716 when the optical pulse 718 is introduced from the input optical waveguide 712b. The output optical waveguide 714b transmits the photon pulse 720 emitted from the color center 716 when the optical pulse 718 is introduced from the input optical waveguide 712c. The output optical waveguide 714c transmits the photon pulse 720 emitted from the color center 716 when the optical pulse 718 is introduced from the input optical waveguide 712d. The output optical waveguide 714d transmits the photon pulse 720 emitted from the color center 716 when the optical pulse 718 is introduced from the input optical waveguide 712a. As in Comparative Example 2, when the optical pulse 718 is transmitted through one of the input optical waveguides 712a, 712b, 712c and 712d, the optical pulse 718 is not transmitted through remining input optical waveguides.

As illustrated in FIG. 3, in the diamond crystal layer 710 having a shape extending in eight directions from the center point, a width W of the optical waveguide increases near the center. When the width W increases, higher-order modes may occur deviating from the fundamental mode condition, potentially increasing optical transmission loss. Consequently, the quantum entanglement between adjacent quantum bit elements 700 may not be formed. Therefore, a structure of the quantum bit element 100 as illustrated in FIG. 4 is disclosed.

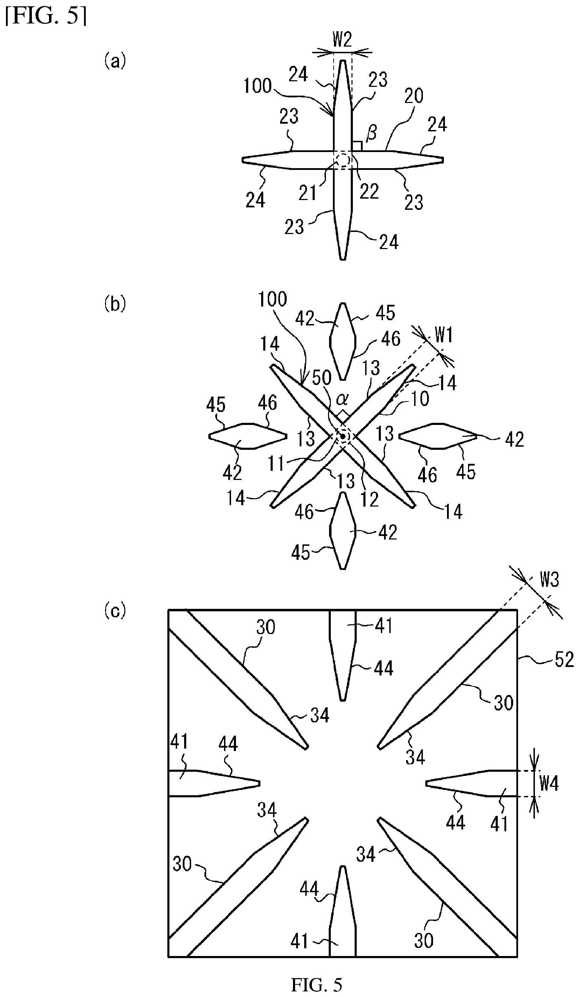

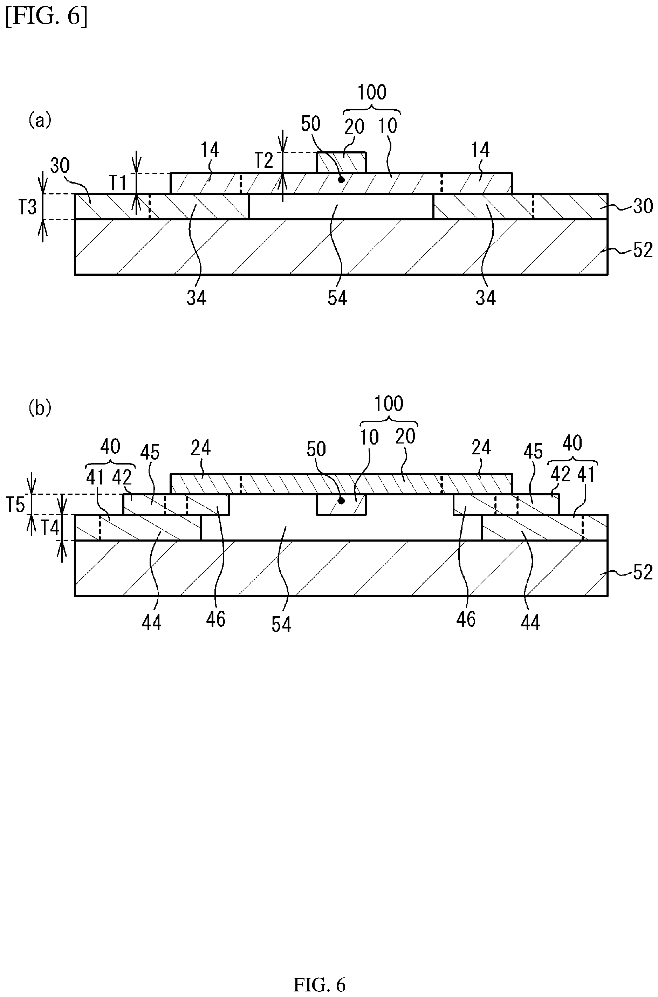

FIG. 4 is a plan view of the quantum bit element 100 according to the embodiment. FIGs. 5(a) to 5(c) are exploded plan views of FIG. 4. FIG. 6(a) is a cross-sectional view taken along a line A-A in FIG. 4, and FIG. 6(b) is a cross-sectional view taken along a line B-B in FIG. 4. As illustrated in FIG. 4, the quantum bit element 100 in the embodiment includes a first diamond crystal layer 10, a second diamond crystal layer 20, and a color center 50.

As illustrated in FIG. 5(b), the first diamond crystal layer 10 has a cross shape in planar view, and has a shape extending in four directions from the first center point 11 so as to be orthogonal to each other. That is, the first diamond crystal layer 10 has a first central portion 12 and first extending portions 13 extending from the first central portion 12 in four directions so as to be orthogonal to each other. Here, the term "orthogonal" is not limited to the case where an angle α formed by the first extending portions 13 is 90 °, and allows a range of 90 ° ± 10 °. The first central portion 12 is, for example, a region having a square shape in planar view. The first center point 11 is, for example, a circle defined to include the center of the first central portion 12 and to have a certain extent in planar view. For example, the first center point 11 is a circle having a diameter of 1/10 or more and 1/2 or less of the length of one side of the first central portion 12. The first center point 11 is not limited to the circular shape, and may be another shape such as a rectangular shape. The four first extending portions 13 are congruent with each other in planar view.

As illustrated in FIG. 5(a), the second diamond crystal layer 20 also has a cross shape in planar view, and has a shape extending in four directions so as to be orthogonal to each other from the second center point 21. That is, the second diamond crystal layer 20 has a second central portion 22 and second extending portions 23 extending from the second central portion 22 in four directions so as to be orthogonal to each other. Here, the term "orthogonal" is not limited to the case where an angle β formed by the second extending portions 23 is 90 °, and allows a range of 90 ° ± 10 °. The second central portion 22 is, for example, a region having a square shape in planar view. The second center point 21 is, for example, a circle defined to include the center of the second central portion 22 and to have a certain extent in planar view, and is a circle having the same size as the first center point 11 in planar view. For example, the second center point 21 is a circle having a diameter of not less than 1/10 and more and 1/2 or less of the length of one side of the second central portion 22. The second center point 21 is not limited to the circular shape, and may have another shape such as a rectangular shape. Four second extending portions 23 are congruent with each other in planar view. The four second extending portions 23 are congruent with the four first extending portions 13 in planar view.

As illustrated in FIG. 4, FIG. 6(a) and FIG. 6(b), a first optical waveguide 30 is connected to each of four first ends 14 of the first diamond crystal layer 10. Second optical waveguides 40 are connected to four second ends 24 of the second diamond crystal layer 20, respectively. The first optical waveguide 30 and the second optical waveguide 40 are formed of, for example, sapphire.

As illustrated in FIG. 4, FIG. 5(a), FIG. 5(b), FIG. 5(c), FIG. 6(a), and FIG. 6(b), the first diamond crystal layer 10, the second diamond crystal layer 20, the first optical waveguide 30, and the second optical waveguide 40 are provided on a substrate 52. The substrate 52 is formed of a material having a refractive index smaller than that of the first optical waveguide 30 and the second optical waveguide 40, and is, for example, a silicon substrate with an oxide film when the first optical waveguide 30 and the second optical waveguide 40 are formed of sapphire.

The first optical waveguide 30, and a lower layer optical waveguide 41 constituting the second optical waveguide 40 are provided in contact with the upper surface of the substrate 52. The first diamond crystal layer 10 is provided on the first optical waveguide 30 with the first end 14 in contact with the upper surface of a third end 34 of the first optical waveguide 30. A gap 54 is formed between the first diamond crystal layer 10 and the substrate 52.

An upper layer optical waveguide 42 constituting the second optical waveguide 40 is provided on the lower layer optical waveguide 41. The second diamond crystal layer 20 is provided on the upper layer optical waveguide 42. A fifth end 45 as one end of the upper layer optical waveguide 42 is in contact with the upper surface of a sixth end 44 of the lower layer optical waveguide 41, and a fourth end 46 as the other end of the upper layer optical waveguide 42 is in contact with the lower surface of the second end 24 of the second diamond crystal layer 20.

The second diamond crystal layer 20 is stacked on the first diamond crystal layer 10 such that the second center point 21 overlaps at least a part of the first center point 11 of first diamond crystal layer 10. The second diamond crystal layer 20 is in contact with the first diamond crystal layer 10. In planar view, the second extending portion 23 of the second diamond crystal layer 20 is located between the first extending portions 13 of the first diamond crystal layer 10. An angle γ formed between the first extending portion 13 of the first diamond crystal layer 10 and the second extending portion 23 of the second diamond crystal layer 20 is 45 ° ± 5 °.

The first end 14 of the first diamond crystal layer 10 has a tapered shape in which the width gradually decreases toward a tip. Similarly, the second end 24 of the second diamond crystal layer 20 has a tapered shape in which the width gradually decreases toward the tip. The third end 34 of the first optical waveguide 30 also has a tapered shape in which the width gradually decreases toward the tip. The sixth end 44 of the lower layer optical waveguide 41 constituting the second optical waveguide 40 also has a tapered shape in which the width gradually decreases toward the tip. Each of the fifth end 45 and the fourth end 46 of the upper layer optical waveguide 42 also has a tapered shape in which the width gradually decreases toward the tip.

The first diamond crystal layer 10 and the first optical waveguide 30 are in contact with each other with the tapered portions of the first end 14 and the third end 34 overlapping each other. This allows light to be transmitted between the first diamond crystal layer 10 and the first optical waveguide 30 while suppressing the transmission loss.

The second diamond crystal layer 20, and the upper layer optical waveguide 42 constituting the second optical waveguide 40 are in contact with each other with the tapered portions of the second end 24 and the fourth end 46 overlapping each other. This allows light to be transmitted between the second diamond crystal layer 20 and the upper layer optical waveguide 42 while suppressing the transmission loss. The upper layer optical waveguide 42 and the lower layer optical waveguide 41 are in contact with each other with the tapered portions of the fifth end 45 of the upper layer optical waveguide 42 and the sixth end 44 of the lower layer optical waveguide 41 overlapping each other. This allows light to be transmitted between the upper layer optical waveguide 42 and the lower layer optical waveguide 41 while suppressing the transmission loss.

A thickness T1 of the first diamond crystal layer 10 and a thickness T2 of the second diamond crystal layer 20 are, for example, 100 nm to 300 nm, and are 150 nm as an example. A width W1 of the first extending portion 13 and a width W2 of the second extending portion 23 are, for example, 250 nm to 400 nm, and are 300 nm as an example. The length of the tapered portion of the first end 14 of the first diamond crystal layer 10 and the length of the tapered portion of the second end 24 of the second diamond crystal layer 20 are, for example, 7 µm or more, and are 10 µm as an example.

A thickness T3 of the first optical waveguide 30 and a thickness T4 of the lower layer optical waveguide 41 constituting the second optical waveguide 40 are, for example, 100 nm to 300 nm, and are 200 nm as an example. A thickness T5 of the upper layer optical waveguide 42 constituting the second optical waveguide 40 is, for example, from 100 nm to 300 nm, and is 150 nm as an example. A width W3 of the first optical waveguide 30 and a width W4 of the lower layer optical waveguide 41 constituting the second optical waveguide 40 are, for example, 500 nm to 900 nm, and are 700 nm as an example. The length of the tapered portion of the first optical waveguide 30 and the lengths of the tapered portions of the lower layer optical waveguide 41 and the upper layer optical waveguide 42 constituting the second optical waveguide 40 are, for example, 7 µm or more, and are 10 µm as an example.

The first diamond crystal layer 10 includes one color center 50. The second diamond crystal layer 20 does not include a color center. Thus, there is only one color center 50. When a plurality of color centers are present in the vicinity, light emitted from one color center is absorbed by another color center, and therefore, only one color center 50 is provided.

The color center 50 is present in the first diamond crystal layer 10 in the vicinity of an interface between the first diamond crystal layer 10 and the second diamond crystal layer 20. The color center 50 is a type of complex defect formed by an impurity atom in the diamond single crystal and a vacancy adjacent to the impurity atom. The impurity atom is at least one of nitrogen (N), silicon (Si), germanium (Ge), tin (Sn), lead (Pb), and boron (B). The color center 50 is formed to overlap the first center point 11 of the first diamond crystal layer 10 and the second center point 21 of the second diamond crystal layer 20 in planar view.

With the structure of the quantum bit element 100 disclosed in FIGs. 4 to 6(b), the quantum entanglement can be formed between the plurality of adjacent quantum bits, and the optical transmission loss can be suppressed.

### [Manufacturing Method]

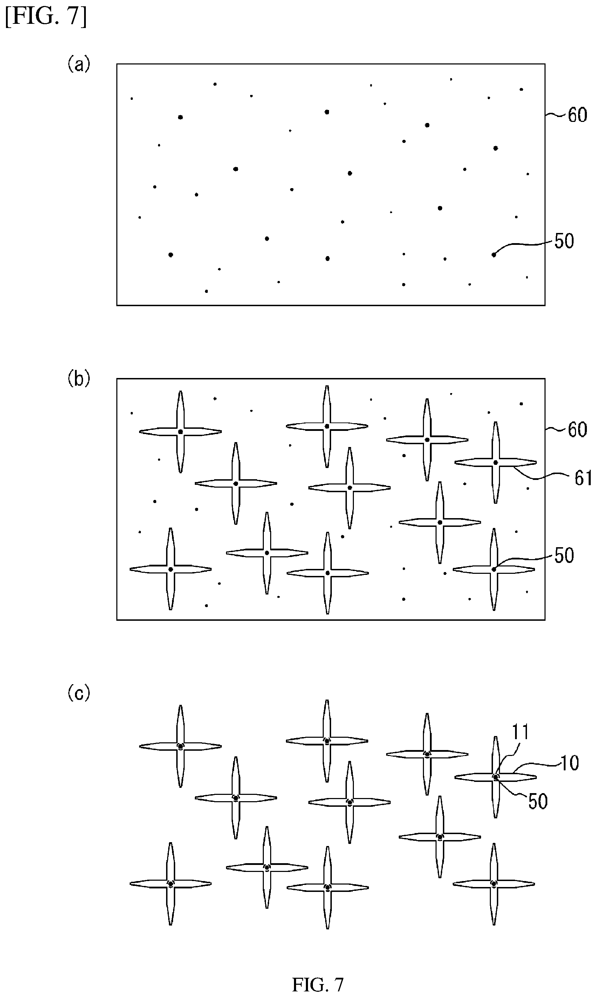

FIGs. 7(a) to 9(c) are diagrams illustrating a method of manufacturing a quantum device according to the embodiment. As illustrated in FIG. 7(a), at least one of nitrogen (N), silicon (Si), germanium (Ge), tin (Sn), lead (Pb), and boron (B) is ion-implanted into a diamond substrate 60. For example, ion implantation is performed using a focused ion beam method. Thus, the plurality of color centers 50 are formed on the diamond substrate 60. The depth of the color center 50 can be controlled by implantation energy in the ion implantation. Before or after the ion implantation, a step of thinning the diamond substrate 60 to a desired thickness is performed.

As illustrated in FIG. 7(b), a plurality of color centers 50 having favorable luminescence characteristics are picked up from the plurality of color centers 50, and a mask pattern 61 corresponding to the shape of the first diamond crystal layer 10 is formed on the diamond substrate 60. The mask pattern 61 is formed of, for example, a resist.

As illustrated in FIG. 7(c), the diamond substrate 60 is etched using the mask pattern 61 as a mask. For example, the diamond substrate 60 is etched using inductively coupled plasma etching. Thereby, the plurality of first diamond crystal layers 10 including color centers 50 are formed.

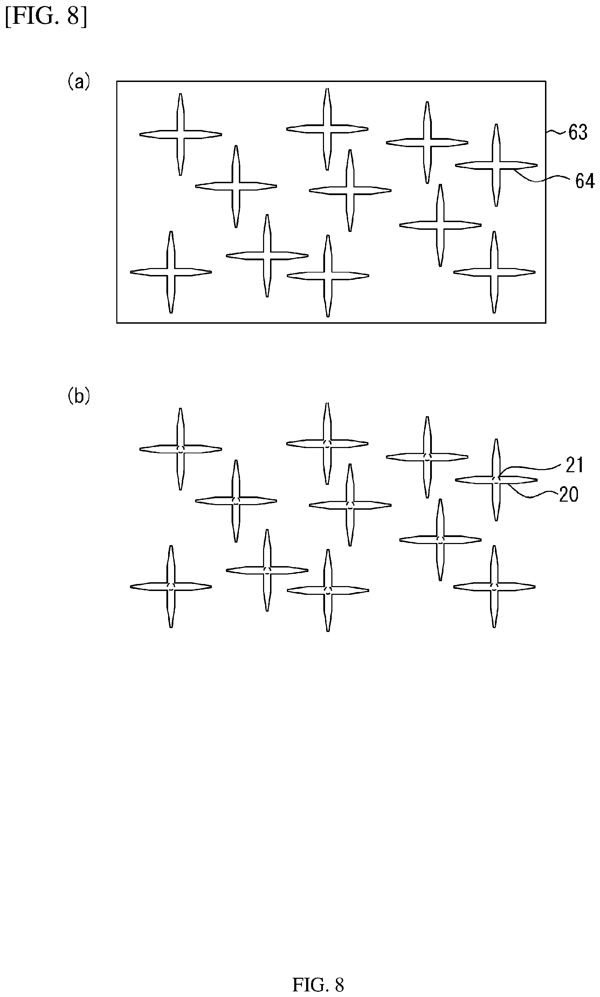

As illustrated in FIG. 8 (a), a mask pattern 64 corresponding to the shape of the second diamond crystal layer 20 is formed on another diamond substrate 63 thinned to a desired thickness. The mask pattern 64 is formed of, for example, a resist.

As illustrated in FIG. 8(b), the diamond substrate 63 is etched using the mask pattern 64 as a mask. For example, the diamond substrate 63 is etched by inductively coupled plasma etching. Thereby, the plurality of second diamond crystal layers 20 are formed.

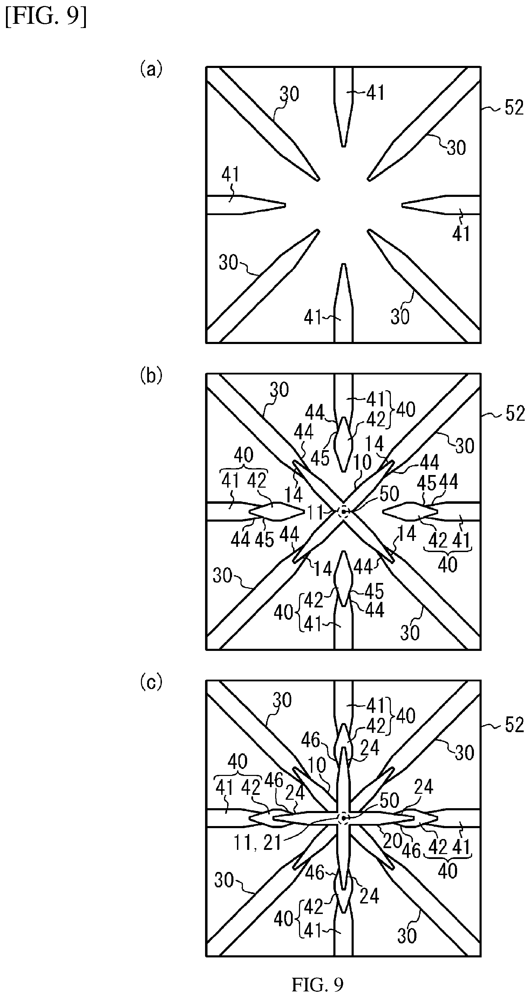

As illustrated in FIG. 9(a), after the sapphire layer formed on the substrate 52 is thinned to a desired thickness, the sapphire layer is etched using a mask pattern (not illustrated) formed on the sapphire layer as a mask. Thus, the first optical waveguide 30 and the lower layer optical waveguide 41 constituting the second optical waveguide 40 are formed on the substrate 52.

As illustrated in FIG. 9(b), the first diamond crystal layer 10 produced in FIGs. 7(a) to 7(c) is placed on the first optical waveguide 30. At this time, the first diamond crystal layer 10 is placed on the first optical waveguide 30 with the surface near which the color center 50 is present facing upward. The first diamond crystal layer 10 is placed on the first optical waveguide 30 such that the first end 14 overlaps and contacts the sixth end 44 of the first optical waveguide 30. Further, the upper layer optical waveguide 42, which is prepared in advance by etching a sapphire substrate thinned to a desired thickness, is placed on the lower layer optical waveguide 41. The upper layer optical waveguide 42 is placed on the lower layer optical waveguide 41 so that the fifth end 45 overlaps and contacts the sixth end 44 of the lower layer optical waveguide 41. The first optical waveguide 30 and the first diamond crystal layer 10, and the lower layer optical waveguide 41 and the upper layer optical waveguide 42 are fixed by van der Waals forces generated by contact with each other.

As illustrated in FIG. 9 (c), the second diamond crystal layer 20 produced in FIG. 8 (a) and FIG. 8 (b) is placed on the first diamond crystal layer 10 and the upper layer optical waveguide 42. The second diamond crystal layer 20 is placed on the first diamond crystal layer 10 such that the second center point 21 overlaps and contacts at least a part of the first center point 11 of the first diamond crystal layer 10. Also, the second diamond crystal layer 20 is placed on the upper layer optical waveguide 42 such that the second end 24 overlaps and contacts the fourth end 46 of the upper layer optical waveguide 42. The first diamond crystal layer 10 and the second diamond crystal layer 20, and the upper layer optical waveguide 42 and the second diamond crystal layer 20 are fixed by van der Waals forces generated by contact with each other.

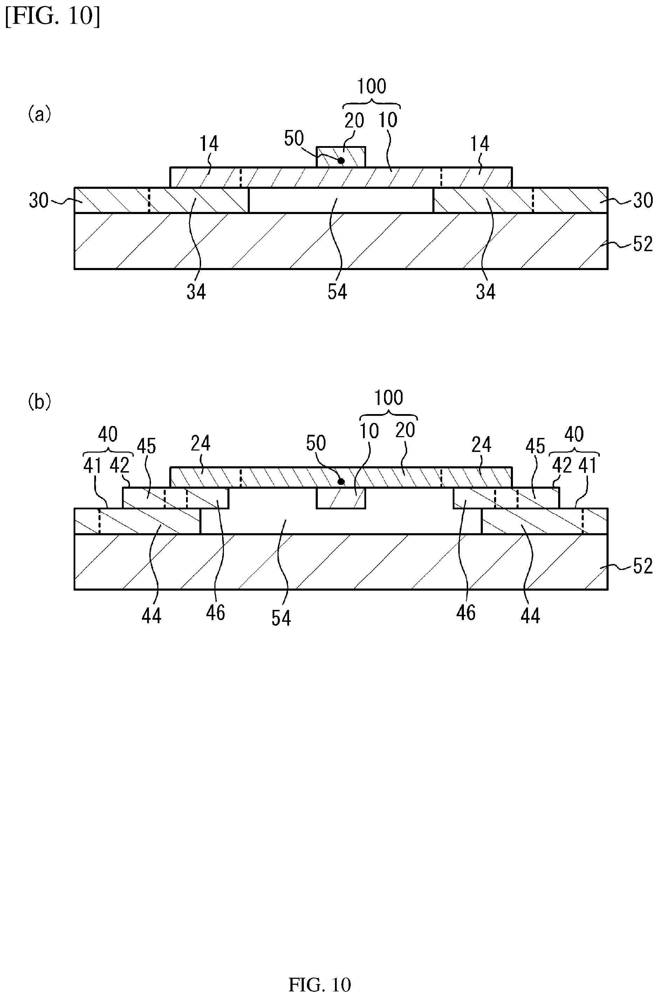

FIGs. 10(a) and 10(b) are cross-sectional views illustrating other examples of the position of the color center 50 in the embodiment. As illustrated in FIGs. 10(a) and 10(b), the first diamond crystal layer 10 does not include a color center, and the second diamond crystal layer 20 includes only one color center 50. The color center 50 is present in the second diamond crystal layer 20 in the vicinity of the interface between the first diamond crystal layer 10 and the second diamond crystal layer 20.

A quantum device in which first diamond crystal layer 10 does not include the color center and the second diamond crystal layer 20 includes the color center 50 is manufactured by the following manufacturing method. First, the second diamond crystal layer 20 including the color center 50 is formed by a method similar to that of FIGs. 7(a) to 7(c). The first diamond crystal layer 10 not including the color center 50 is formed by a method similar to that of FIGs. 8(a) and 8(b). Next, as in FIG. 9(b), the first diamond crystal layer 10 is placed on the first optical waveguide 30, and the upper layer optical waveguide 42 is placed on the lower layer optical waveguide 41. The difference from FIG. 9 (b) is that the color center 50 is not present in the first diamond crystal layer 10. Next, as in FIG. 9(c), the second diamond crystal layer 20 is placed on the first diamond crystal layer 10 and the upper layer optical waveguide 42. The difference from FIG. 9 (c) is that the second diamond crystal layer 20 includes the color center 50, and is placed on the first diamond crystal layer 10 with a surface near which the color center 50 is present facing the first diamond crystal layer 10.

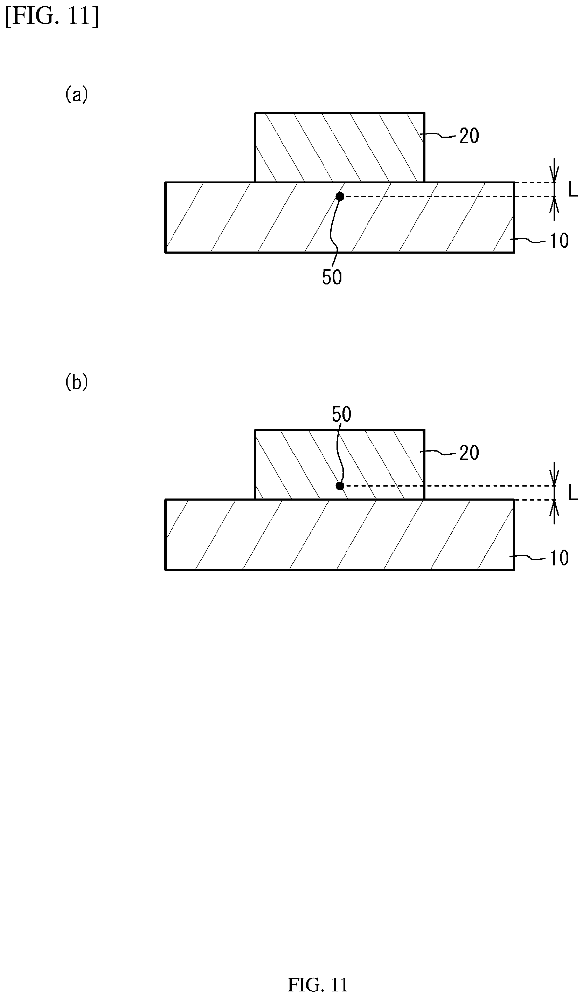

FIGs. 11(a) and 11(b) are cross-sectional views of the vicinity of the color center 50 in the embodiment. FIG. 11(a) illustrates a case where the color center 50 is present in the first diamond crystal layer 10. In this case, a distance L between the color center 50, and the interface between the first diamond crystal layer 10 and the second diamond crystal layer 20 is 30 nm or less. FIG. 11(b) illustrates a case where the color center 50 is present in the second diamond crystal layer 20. Even in this case, the distance L between the color center 50, and the interface between the first diamond crystal layer 10 and the second diamond crystal layer 20 is 30 nm or less.

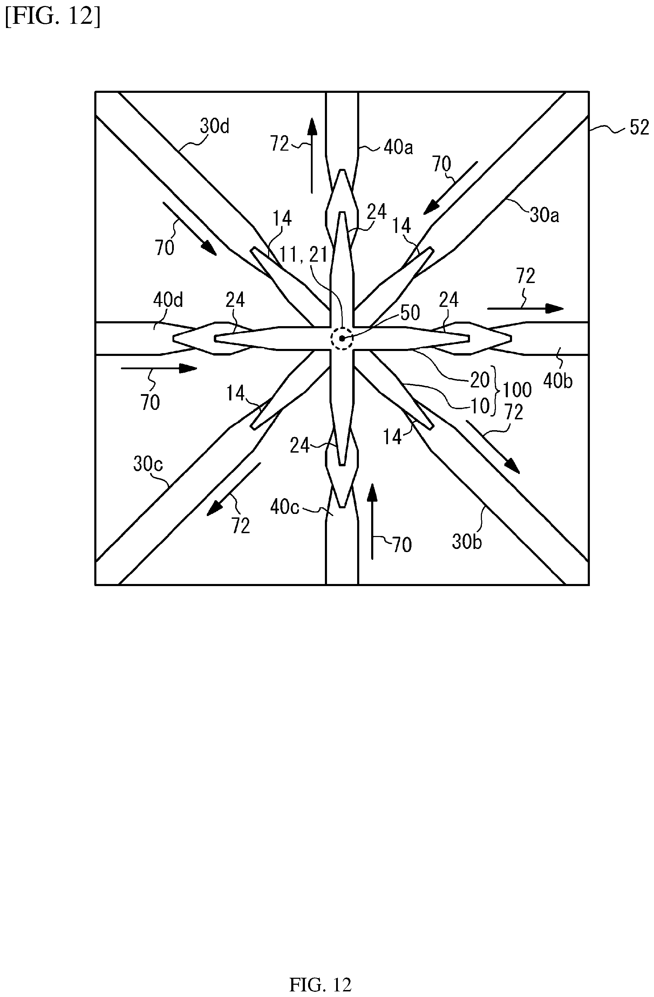

FIG. 12 is a plan view illustrating transmission of an optical pulse 70 and a photon pulse 72 in the embodiment. As illustrated in FIG. 12, four first optical waveguides connected to the four first ends 14 of the first diamond crystal layer 10 are referred to as first optical waveguides 30a, 30b, 30c, and 30d. Four second optical waveguides connected to the four second ends 24 of the second diamond crystal layer 20 are referred to as second optical waveguides 40a, 40b, 40c, and 40d.

The first optical waveguides 30a, the second optical waveguides 40c, the second optical waveguides 40d, and the first optical waveguides 30d are input optical waveguides through which the optical pulses 70 for resonant excitation or initialization introduced into the color centers 50 are transmitted.

The second optical waveguide 40a is an output optical waveguide that transmits the photon pulse 72 of the single photon emitted from the color center 50 when the optical pulse 70 is introduced from the second optical waveguide 40c. The second optical waveguide 40b is an output optical waveguide that transmits the photon pulse 72 of the single photon emitted from the color center 50 when the optical pulse 70 is introduced from the second optical waveguide 40d. The first optical waveguide 30b is an output optical waveguide that transmits the photon pulse 72 of the single photon emitted from the color center 50 when the optical pulse 70 is introduced from the first optical waveguide 30d. The first optical waveguide 30c is an output optical waveguide that transmits the photon pulse 72 of the single photon emitted from the color center 50 when the optical pulse 70 is introduced from the first optical waveguide 30a. Similar to Comparative Examples 2 and 3, when the optical pulse 70 is transmitted through any one of the first optical waveguides 30a, the second optical waveguides 40c, the second optical waveguides 40d, and the first optical waveguides 30d, the optical pulse 70 is not transmitted through the remaining optical waveguides. However, in FIG. 12, for convenience of explanation, the optical pulse 70 is illustrated in all of the first optical waveguide 30a, the second optical waveguide 40c, the second optical waveguide 40d, and the first optical waveguide 30d. Similarly, in FIG. 12, the photon pulse 72 is illustrated in all of the second optical waveguides 40a, the second optical waveguides 40b, the first optical waveguides 30b, and the first optical waveguides 30c.

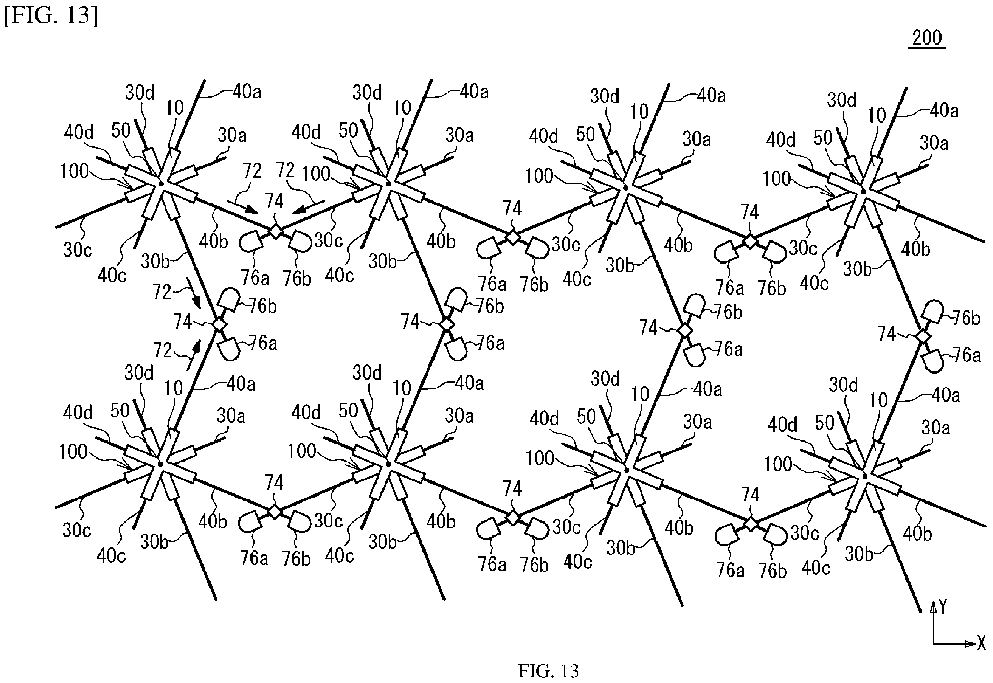

FIG. 13 is a plan view of a main portion of a quantum device 200 according to an embodiment. As illustrated in FIG. 13, in the quantum device 200 according to the embodiment, the plurality of quantum bit elements 100 are arranged in a lattice shape in the X direction and the Y direction. The second optical waveguides 40b of one of the quantum bit elements 100 adjacent to each other in the X direction and the first optical waveguides 30c of the other of the quantum bit elements 100 are connected to a common beam splitter 74. The beam splitter 74 is an example of a branching element. The beam splitter 74 is connected to photodetectors 76a and 76b. The photodetectors 76a and 76b are single-photon photodetectors, and are, for example, a single-photon avalanche photo detector (SPAD) or a superconducting nanowire single-photon detector (SNSPD).

The photon pulse 72 emitted from one of the quantum bit elements 100 adjacent in the X-direction into the second optical waveguide 40b and the photon pulse 72 emitted from the other of the quantum bit elements 100 into the first optical waveguide 30c are introduced into the common beam splitter 74. The beam splitter 74 branches, in the first direction or the second direction, the photon pulse 72 emitted from one of the quantum bit elements 100 adjacent in the X direction into the second optical waveguide 40b and the photon pulse 72 emitted from the other of the quantum bit elements 100 into the first optical waveguide 30c. In the beam splitter 74, the first direction and the second direction are orthogonal to each other, and the probability of being branched into the first direction and the second direction is 50%, respectively. The beam splitter 74 is, for example, a half mirror that divides an amount of transmitted light and an amount of reflected light at a ratio of approximately 1:1. The photon pulse 72 emitted from one of the adjacent quantum bit elements 100 strikes one surface of the half mirror and is reflected or transmitted. The photon pulse 72 emitted from the other of the adjacent quantum bit elements 100 strikes the other surface of the half mirror and is reflected or transmitted. The photodetector 76a detects the photon pulse 72 that is incident on and reflected from one surface of the half mirror, or the photon pulse 72 that is incident on and transmitted through the other surface of the half mirror. The photodetector 76b detects the photon pulse 72 that is incident on and reflected from the other surface of the half mirror, or the photon pulse 72 that is incident on and transmitted through the one surface of the half mirror. The photon pulse 72 emitted from one of the adjacent quantum bit elements 100 and the photon pulse 72 emitted from the other of the adjacent quantum bit elements 100 merge at the beam splitter 74 to form a two-photon correlation. Accordingly, the quantum entanglement between the quantum bit elements 100 adjacent to each other in the X direction can be formed.

The first optical waveguide 30b of one of the quantum bit elements 100 adjacent to each other in the Y direction and the second optical waveguide 40a of the other of the quantum bit elements 100 are connected to the common beam splitter 74. Therefore, the photon pulse 72 emitted from one of the quantum bit elements 100 adjacent in the Y direction into the first optical waveguide 30b and the photon pulse 72 emitted from the other quantum bit element 100 into the second optical waveguide 40a are introduced into the common beam splitter 74, and are detected by the photodetector 76a or the photodetector 76b. Accordingly, the quantum entanglement between the quantum bit elements 100 or 110 adjacent to each other in the Y direction can be formed.

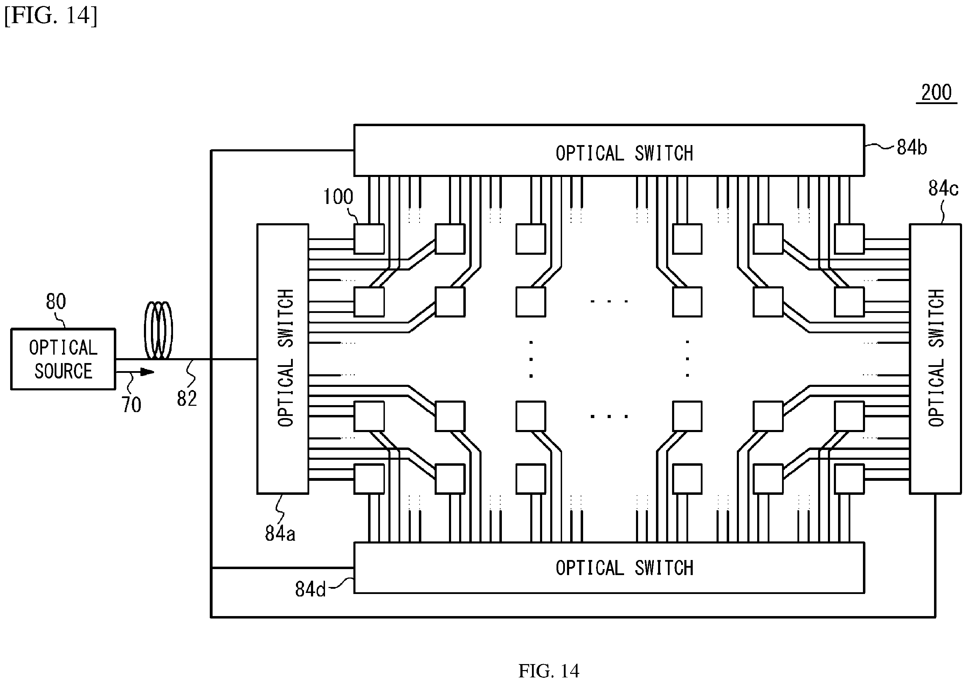

FIG. 14 is a block diagram of a quantum device 200 according to the embodiment. In FIG. 14, the beam splitter 74 and the photodetectors 76a and 76b are not illustrated for the sake of clarity. The beam splitter 74 and the photodetectors 76a and 76b are provided in the vicinity of the quantum bit element 100.

As illustrated in FIG. 14, the quantum device 200 includes an optical source 80, an optical fiber 82, optical switches 84a, 84b, 84c and 84d, the plurality of quantum bit elements 100, and the beam splitter 74 and the photodetectors 76a and 76b which are not illustrated. The optical source 80 is, for example, a laser light source, and generates the optical pulse 70 for resonance excitation or initialization. The optical pulse 70 is introduced into the optical switches 84a, 84b, 84c, and 84d via the optical fiber 82.

The optical switches 84a, 84b, 84c, and 84d are, for example, MEMS switches. The optical switches 84a, 84b, 84c, and 84d introduce the optical pulse 70 into two adjacent quantum bit elements 100 among the plurality of quantum bit elements 100 arranged in the lattice shape. The optical pulse 70 is introduced into the color center 50 from the first optical waveguide 30a, the second optical waveguide 40c, the second optical waveguide 40d, or the first optical waveguide 30d (see FIG. 12) in the two adjacent quantum bit elements 100. Accordingly, as illustrated in FIG. 13, the quantum entanglement can be formed between the plurality of adjacent quantum bit elements 100.

According to the embodiment, as illustrated in FIG. 4, the quantum bit element 100 includes the first diamond crystal layer 10, the second diamond crystal layer 20, and the color center 50. As illustrated in FIG. 5(b), the first diamond crystal layer 10 has the first center point 11 and has the shape extending from the first center point 11 in four directions so as to be orthogonal to each other. As illustrated in FIG. 5(a), the second diamond crystal layer 20 has the second center point 21 and has the shape extending in four directions from the second center point 21 so as to be orthogonal to each other. The first diamond crystal layer 10 and the second diamond crystal layer 20 are stacked such that at least parts of the first center point 11 and the second center point 21 overlap each other. Furthermore, the first optical waveguides 30 are connected to the four first ends 14 of the first diamond crystal layer 10, respectively, and the second optical waveguides 40 are connected to each of the four second ends 24 of the second diamond crystal layer 20, respectively. Accordingly, the quantum bit element 100 has the four-input four-output structure, and thus the quantum entanglement between the quantum bit elements 100 adjacent to each other in the X direction and the Y direction can be formed as illustrated in FIG. 13. The first diamond crystal layer 10 has a shape extending in four directions from a first center point 11 so as to be orthogonal to each other, and the second diamond crystal layer 20 has a shape extending in four directions from a second center point 21 so as to be orthogonal to each other. Therefore, in the first diamond crystal layer 10 and the second diamond crystal layer 20, the width of the optical waveguide in the vicinity of the center is suppressed from being widened. Therefore, the occurrence of the higher-order mode is suppressed, and the attenuation or extinction of the photon pulse 72, which is the single photon emitted from the color center 50, can be suppressed. It is preferable that the first diamond crystal layer 10 and the second diamond crystal layer 20 are stacked such that 1/2 or more of the first center point 11 and 1/2 or more of the second center point 21 overlap each other. It is more preferable that the layers are stacked so that 3/4 or more of the layers overlap each other. It is more preferable that the layers are laminated so that 4/5 or more of the layers overlap each other. It is most preferable that all of the layers are stacked so as to overlap each other.

In the embodiment, as illustrated in FIG. 4, the color center 50 is present to overlap the first center point 11 of the first diamond crystal layer 10 and the second center point 21 of the second diamond crystal layer 20 in planar view. This makes it easier for the optical pulse 70 transmitted through the first optical waveguide 30 and the second optical waveguide 40 to be introduced into the color center 50, and makes it easier for the photon pulse 72 emitted from the color center 50 to be transmitted through the first optical waveguide 30 and the second optical waveguide 40.

In the embodiment, as illustrated in FIGs. 6(a) and 6(b), the first diamond crystal layer 10 is provided on the first optical waveguide 30 with the first end 14 in contact with the upper surface of the third end 34 of the first optical waveguide 30. The second diamond crystal layer 20 is provided on the second optical waveguide 40 with the second end 24 in contact with the upper surface of the fourth end 46 of the upper layer optical waveguide 42 constituting the second optical waveguide 40. This facilitates the optical transmission between the first diamond crystal layer 10 and the first optical waveguide 30 and the optical transmission between the second diamond crystal layer 20 and the second optical waveguide 40.

In the embodiment, as illustrated in FIGs. 6(a) and 6(b), the second diamond crystal layer 20 is stacked on the first diamond crystal layer 10. The first optical waveguide 30 is provided in a layer lower than the first diamond crystal layer 10. The second optical waveguide 40 includes the lower layer optical waveguide 41 provided in the same layer as the first optical waveguide 30, and the upper layer optical waveguide 42 provided in the same layer as the first diamond crystal layer 10. This provides a configuration that facilitates the optical transmission between the first diamond crystal layer 10 and the first optical waveguide 30, and the optical transmission between the second diamond crystal layer 20 and the second optical waveguide 40.

In the example, as illustrated in FIGs. 5(a) to 5(c), 6(a) and 6(b), the first diamond crystal layer 10 is provided on the first optical waveguide 30 such that the first end 14 having a width that decreases toward the tip of the first diamond crystal layer 10 is in contact with the third end 34 having a width that decreases toward the tip of the first optical waveguide 30. The upper layer optical waveguide 42 constituting the second diamond crystal layer 20 is provided on the lower layer optical waveguide 41 such that the fifth end 45 having a width that decreases toward the tip of the upper layer optical waveguide 42 is in contact with the sixth end 44 having a width that decreases toward the tip of the lower layer optical waveguide 41. The second diamond crystal layer 20 is provided on the upper layer optical waveguide 42 such that the second end 24 having a width that decreases toward the tip of the second diamond crystal layer 20 is in contact with the fourth end 46 having a width that decreases toward the tip of the upper layer optical waveguide 42. This reduces the optical transmission loss between the first optical waveguide 30 and the first diamond crystal layer 10 and the optical transmission loss between the second optical waveguide 40 and the second diamond crystal layer 20.

In the embodiment, as illustrated in FIG. 12, the first optical waveguides 30a and 30d among the first optical waveguides 30a to 30d connected to the first ends 14 of the first diamond crystal layer 10 are input optical waveguides through which the optical pulse 70 introduced into the color center 50 is transmitted. The first optical waveguides 30b and 30c are the output optical waveguides through which the photon pulse 72 emitted from the color center 50 is transmitted. Among the second optical waveguides 40a to 40d connected to the second ends 24 of the second diamond crystal layer 20, the second optical waveguides 40c and 40d are input optical waveguides through which the optical pulse 70 introduced into the color center 50 is transmitted. The second optical waveguides 40a and 40b are the output optical waveguides through which the photon pulse 72 emitted from the color center 50 is transmitted. Accordingly, as illustrated in FIG. 13, the quantum entanglement between the quantum bit elements 100 adjacent to each other in the X direction and the Y direction can be formed.

In the example, as illustrated in FIGs. 11(a) and 11(b), the color center 50 is present at a position within 30 nm from the interface between the first diamond crystal layer 10 and the second diamond crystal layer 20. This makes it easy to introduce both of the optical pulse 70 transmitted from the first optical waveguide 30 to the first diamond crystal layer 10 and the optical pulse 70 transmitted from the second optical waveguide 40 to the second diamond crystal layer 20 into the color center 50. In addition, the photon pulse 72 emitted from the color center 50 is easily transmitted to both the first optical waveguide 30 connected to the first diamond crystal layer 10 and the second optical waveguide 40 connected to the second diamond crystal layer 20.

In the example, as illustrated in FIGs. 4, 5(a), and 5(b), the first extending portions 13 extending in four directions from the first center point 11 in the first diamond crystal layer 10 are located between the second extending portions 23 extending in four directions from the second center point 21 in the second diamond crystal layer 20. Accordingly, as illustrated in FIG. 13, the quantum entanglement can be formed between the quantum bit elements 100 adjacent to each other in the X direction and the Y direction.

In the embodiment, as illustrated in FIG. 13, the plurality of quantum bit elements 100 are arranged in the lattice shape. The second optical waveguide 40b or the first optical waveguide 30b connected to one of the quantum bit elements 100 adjacent to each other and the first optical waveguide 30c or the second optical waveguide 40a connected to the other of the quantum bit elements are connected to the common beam splitter 74. The beam splitter 74 branches, in the first direction or the second direction, the photon pulse 72 emitted from one of the adjacent quantum bit elements 100 and the photon pulse 72 emitted from the other of the adjacent quantum bit elements. Accordingly, the quantum entanglement between the adjacent quantum bit elements 100 can be formed.

In the embodiment, as illustrated in FIG. 13, the beam splitter 74 includes the photodetectors 76a and 76b that detect the photon pulse 72 branched in the first direction or the photon pulse 72 branched in the second direction.

Note that in the embodiment, although the case where the first optical waveguide 30 and the second optical waveguide 40 are formed of sapphire is illustrated as an example, they may be formed of other materials as long as the optical pulse 70 and the photon pulse 72 can be transmitted. For example, the first optical waveguide 30 and the second optical waveguide 40 may be formed of silicon oxide, silicon nitride, or silicon carbide. Although the case where the substrate 52 is a silicon substrate with an oxide film is illustrated as an example, a substrate made of another material may be used as long as the material has a refractive index smaller than that of the first optical waveguide 30 and the second optical waveguide 40.

### [Modifications]

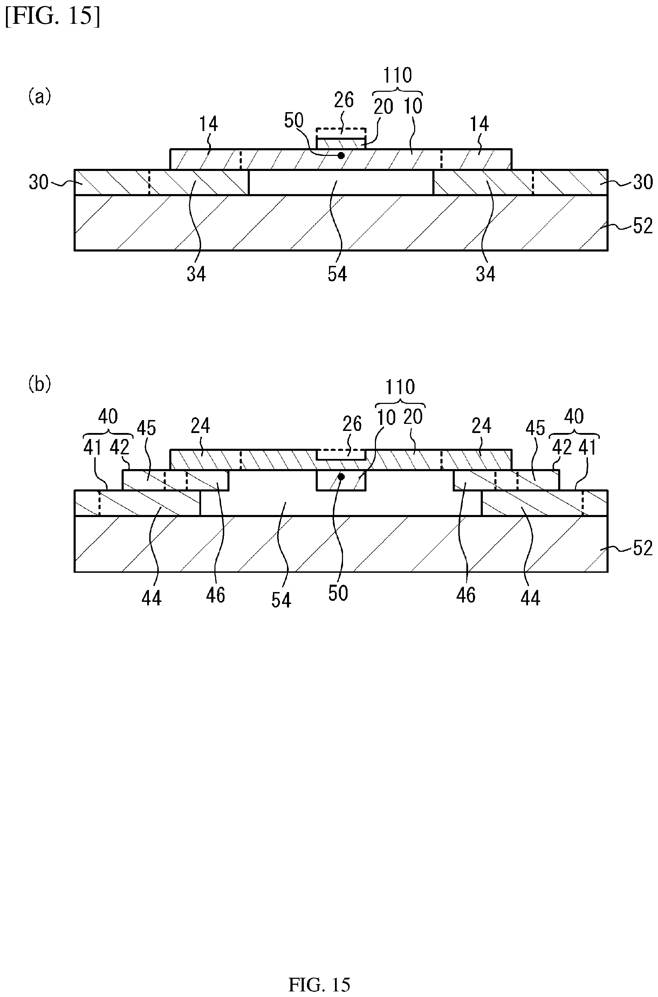

FIGs. 15(a) and 15(b) are cross-sectional views of a quantum bit element 110 in Modification 1 of the embodiment. As illustrated in FIGs. 15(a) and 15(b), in the quantum bit element 110 according to Modification 1 of the embodiment, a recess 26 is formed in the second diamond crystal layer 20 in a region where the first diamond crystal layer 10 and the second diamond crystal layer 20 overlap each other. The recess 26 has, for example, a rectangular shape in cross-sectional view. The depth of the recess 26 is, for example, 1/4 or more and 3/4 or less of the thickness of the second diamond crystal layer 20. The recess 26 is provided, for example, in the entire region where the first diamond crystal layer 10 and the second diamond crystal layer 20 overlap each other. The other configurations are the same as those of the embodiment, and thus the description thereof will be omitted.

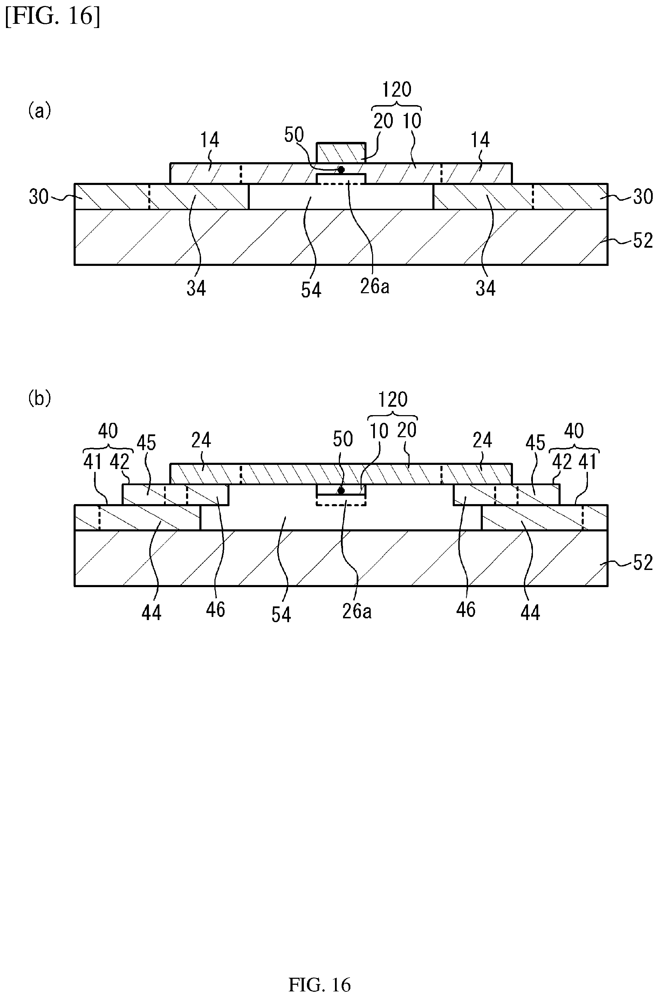

FIGs. 16(a) and 16(b) are cross-sectional views of a quantum bit element 120 in Modification 2 of the embodiment. As illustrated in FIGs. 16(a) and 16(b), in the quantum bit element 120 according to Modification 2 of the embodiment, a recess 26a is formed in the first diamond crystal layer 10 in a region where the first diamond crystal layer 10 and the second diamond crystal layer 20 overlap each other. The recess 26 is not formed in the second diamond crystal layer 20. The recess 26a has, for example, a rectangular shape in cross-sectional view. The depth of the recess 26a is, for example, 1/4 or more and 3/4 or less of the thickness of the first diamond crystal layer 10. The recess 26a is provided, for example, in the entire region where the first diamond crystal layer 10 and the second diamond crystal layer 20 overlap each other. The other configurations are the same as those of the embodiment, and thus the description thereof will be omitted.

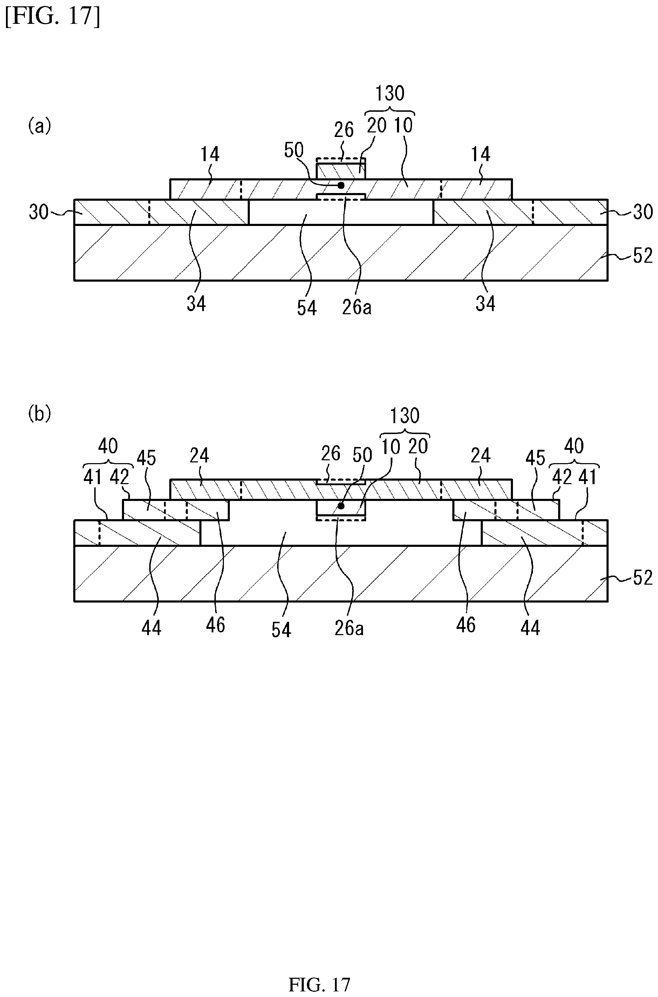

FIGs. 17(a) and 17(b) are cross-sectional views of a quantum bit element 130 in Modification 3 of the embodiment. As illustrated in FIGs. 17(a) and 17(b), in the quantum bit element 130 according to Modification 3 of the embodiment, the recess 26a is formed in the first diamond crystal layer 10 in the region where the first diamond crystal layer 10 and the second diamond crystal layer 20 overlap each other, and the recess 26 is formed in the second diamond crystal layer 20. The other configurations are the same as those of the embodiment, and thus the description thereof will be omitted.

In Modifications 1 to 3 of the embodiment, at least one of the first diamond crystal layer 10 and the second diamond crystal layer 20 has the recesses 26 and 26a in the region where the first diamond crystal layer 10 and the second diamond crystal layer 20 overlap each other. This suppresses an increase in the thickness of the region where the first diamond crystal layer 10 and the second diamond crystal layer 20 overlap each other, and suppresses an increase in the effective refractive index. Therefore, it is possible to suppress the occurrence of a higher mode in the region where the first diamond crystal layer 10 and the second diamond crystal layer 20 overlap each other, and to suppress an increase in the optical transmission loss.

In Modification 3 of the embodiment, the recess 26a is formed in the first diamond crystal layer 10, and the recess 26 is formed in the second diamond crystal layer 20. This makes it possible to reduce the thickness of the overlapping region while ensuring the optical transmission path of each of the first diamond crystal layer 10 and the second diamond crystal layer 20 by making the recess 26a of the first diamond crystal layer 10 and the recess 26 of the second diamond crystal layer 20 shallow.

In Modifications 1 and 2 of the embodiment, the depth of the recesses 26 and 26a is preferably around 1/2 of the thickness of the first and second diamond crystal layers 10 and 20 from the viewpoint of securing the optical transmission path while reducing the thickness in the region where the first and second diamond crystal layers 10 and 20 overlap. That is, the depth of the recesses 26 and 26a is preferably 1/3 or more and 2/3 or less, and more preferably 5/12 or more and 7/12 or less of the thickness of the first and second diamond crystal layers 10 and 20. In Modification 3 of the embodiment, since both the recesses 26 and 26a are provided, the depth of each of the recesses 26 and 26a is preferably 1/6 or more and 1/3 or less, and more preferably 5/24 or more and 7/24 or less of the thickness of the first and second diamond crystal layers 10, 20

In Modifications 1 to 3 of the embodiment, although the case where the recesses 26 and 26a have a rectangular shape in cross-sectional view is illustrated as an example, the recesses may have other shapes such as a semicircular shape, a semielliptical shape, or a triangular shape. In addition, from the viewpoint of suppressing an increase in the effective refractive index, the recesses 26 and 26a are preferably provided in the entire region where the first and second diamond crystal layers 10 and 20 overlap each other, but may be provided in a region of 1/4 or more, 1/2 or more, or 3/4 or more.

Although the embodiments of the present invention have been described in detail above, the present invention is not limited to the specific embodiments, and various modifications and changes can be made within the scope of the gist of the invention described in the claims.

## Claims

1. A quantum device comprising:
a quantum bit element that includes a first diamond crystal layer having a first center point and having a shape extending in four directions from the first center point so as to be orthogonal to each other, a second diamond crystal layer having a second center point and having a shape extending in four directions from the second center point so as to be orthogonal to each other, and a color center present in one of the first diamond crystal layer and the second diamond crystal layer, the first diamond crystal layer and the second diamond crystal layer being stacked so that at least parts of the first center point and the second center point overlap each other;
a first optical waveguide connected to each of four first ends of the first diamond crystal layer; and
a second optical waveguide connected to each of four second ends of the second diamond crystal layer.

2. The quantum device according to claim 1, wherein
the color center is present to overlap the first central point and the second central point in planar view.

3. The quantum device according to claim 1 or 2, wherein
the first diamond crystal layer is provided on the first optical waveguide with the first end in contact with an upper surface of a third end of the first optical waveguide, and
the second diamond crystal layer is provided on the second optical waveguide with the second end in contact with an upper surface of a fourth end of the second optical waveguide.

4. The quantum device according to claim 3, wherein
the second diamond crystal layer is stacked on the first diamond crystal layer,
the first optical waveguide is provided in a layer lower than the first diamond crystal layer,
the second optical waveguide includes a lower layer optical waveguide provided in a same layer as the first optical waveguide, and an upper layer optical waveguide provided in the same layer as the first diamond crystal layer.

5. The quantum device according to claim 4, wherein
the first diamond crystal layer is provided on the first optical waveguide such that the first end having a width that decreases toward a tip is in contact with the third end having a width that decreases toward a tip of the first optical waveguide,
the upper layer optical waveguide is provided on the lower layer optical waveguide such that a fifth end having a width that decreases toward a tip is in contact with a sixth end having a width that decreases toward a tip of the lower layer optical waveguide, and
the second diamond crystal layer is provided on the upper layer optical waveguide such that the second end having a width that decreases toward a tip is in contact with the fourth end having a width that decreases toward a tip end of the upper layer optical waveguide.

6. The quantum device according to claim 1 or 2, wherein
two first optical waveguides of four first optical waveguides connected to the four first ends of the first diamond crystal layer and two second optical waveguides of four second optical waveguides connected to the four second ends of the second diamond crystal layer are input optical waveguides through which light introduced into the color center is transmitted, and remaining two first optical waveguides of the four first optical waveguides and remaining two second optical waveguides of the four second optical waveguides are output optical waveguides through which a photon emitted from the color center is transmitted.

7. The quantum device according to claim 1 or 2, wherein
the color center is present within 30 nm from an interface between the first diamond crystal layer and the second diamond crystal layer.

8. The quantum device according to claim 1 or 2, wherein
at least one of the first diamond crystal layer and the second diamond crystal layer has a recess in a region where the first diamond crystal layer and the second diamond crystal layer overlap each other.

9. The quantum device according to claim 1 or 2, wherein
a first extending portion extending from the first center point in the four directions in the first diamond crystal layer is located between second extending portions extending from the second center point in the four directions in the second diamond crystal layer.

10. The quantum device according to claim 1 or 2, further comprising
a branching element that is connected to the first optical waveguide or the second optical waveguide connected to one of quantum bit elements adjacent to each other and the first optical waveguide or the second optical waveguide connected to another of the quantum bit elements, and branches, in a first direction or a second direction, a first photon emitted from the one of the quantum bit elements and a second photon emitted from the another of the quantum bit elements.

11. The quantum device according to claim 10, further comprising
a first photodetector and a second photodetector that detect the first photon or the second photon branched in the first direction or the second direction by the branching element.
